# DEMANDE DE BREVET EUROPEEN

(11) **EP 3 280 033 A1**
(43) Date de publication de la demande: **07.02.2018**
(21) Numéro de dépôt: 17182896.5
(22) Date de dépôt: 25.07.2017
(51) Int. Cl.: H02K 3/50

(54) **MACHINE ELECTRIQUE TOURNANTE MUNIE D'UN INTERCONNECTEUR AUTO-DENUDANT**

(30) Priorité: 01.08.2016 FR 1657454
(71) Demandeur: VALEO EQUIPEMENTS ELECTRIQUES MOTEUR, 94046 Créteil Cedex (FR)
(72) Inventeur: DUQUESNE, Jean, 62630 ETAPLES SUR MER (FR); DARRAS, Ludovic, 62630 ETAPLES-SUR-MER (FR); WYSOCKI, Stéphane, 62630 ETAPLES-SUR-MER (FR); RAJAGOPALAN, Bharani, 62630 ETAPLES-SUR-MER (FR); SAPOTILLE, Larry, 94046 CRETEIL CEDEX (FR); LORET, Benjamin, 94046 CRETEIL CEDEX (FR); LAFABRIE, Bryann, 94046 CRETEIL CEDEX (FR); MOTTIER, Renaud, 94046 CRETEIL CEDEX (FR)

(57) **Abrégé**

L'invention porte principalement sur une machine électrique tournante, notamment pour véhicule automobile, comportant:
- un stator (10) comprenant un corps (11) et un bobinage (12), le bobinage (12) étant muni d'une pluralité d'enroulements de phase (18) formés chacun par au moins un conducteur (22) recouvert d'une couche isolante,
- un interconnecteur (30) établissant une liaison électrique d'au moins deux extrémités d'enroulements (25) appartenant à deux enroulements de phase (18) distincts,
caractérisée en ce que l'interconnecteur (30) comporte des crochets (34) aptes à dénuder la couche isolante des extrémités d'enroulements (25) pour l'établissement de la liaison électrique avec les extrémités d'enroulements (25).

## Description

L'invention porte sur une machine électrique tournante munie d'un interconnecteur auto-dénudant.

De façon connue en soi, les machines électriques tournantes comportent un stator et un rotor solidaire d'un arbre. Le rotor peut être solidaire d'un arbre menant et/ou mené et peut appartenir à une machine électrique tournante sous la forme d'un alternateur, d'un moteur électrique, ou d'une machine réversible pouvant fonctionner dans les deux modes.

Le rotor comporte deux roues polaires présentant chacune un flasque d'orientation transversale pourvu à sa périphérie externe de griffes d'orientation axiale. Les griffes des roues polaires sont imbriquées les unes par rapport aux autres. Un noyau cylindrique est intercalé axialement entre les flasques des roues. Ce noyau porte à sa périphérie externe un bobinage d'excitation du rotor.

Alternativement, le corps du rotor pourra comporter un corps formé par un empilage de feuilles de tôles maintenues sous forme de paquet au moyen d'un système de fixation adapté. Le rotor comporte des pôles formés par des aimants permanents logés dans des cavités ménagées dans le corps de rotor. Alternativement, dans une architecture dite à pôles "saillants", les pôles sont formés par des bobines enroulées autour de bras du rotor.

Par ailleurs, le stator est monté dans un carter configuré pour porter à rotation l'arbre par exemple par l'intermédiaire de roulements. Le stator comporte un corps constitué par un empilage de tôles minces formant une culasse en forme de couronne dont la face intérieure est pourvue d'encoches ouvertes vers l'intérieur pour recevoir des enroulements de phase.

Dans un bobinage de type ondulé, les enroulements de phase sont formés chacun à partir d'au moins un conducteur, tel qu'un fil continu, recouvert d'une couche isolante, en particulier une couche d'émail. Alternativement, le bobinage est obtenu à partir d'éléments conducteurs en forme d'épingles reliées électriquement entre elles par exemple par soudage.

Des extrémités des enroulements sont reliées électriquement à un interconnecteur pour obtenir le couplage électrique souhaité de la machine, en triangle ou en étoile. A cet effet, des connexions électriques entre les extrémités d'enroulements et des pattes de l'interconnecteur sont réalisées classiquement via des soudures par résistance ou de type TIG (acronyme de "Tungsten Inert Gas"), laser ou plasma. Ces opérations de soudure nécessitent une opération préalable de dénudage ou de décapage de la couche d'émail, qui est longue et coûteuse à réaliser. En outre, l'encombrement important des électrodes et des porte-électrodes est contraignant pour la définition du système.

La présente invention vise à remédier efficacement à ces inconvénients en proposant une machine électrique tournante, notamment pour véhicule automobile, comportant:
- un stator comprenant un corps et un bobinage, le bobinage étant muni d'une pluralité d'enroulements de phase formés chacun par au moins un conducteur recouvert d'une couche isolante,
- un interconnecteur établissant une liaison électrique d'au moins deux extrémités d'enroulements appartenant à deux enroulements de phase distincts,
caractérisée en ce que l'interconnecteur comporte des crochets aptes à dénuder la couche isolante des extrémités d'enroulements pour l'établissement de la liaison électrique avec les extrémités d'enroulements.

L'invention permet ainsi d'éliminer les étapes de dénudage et de soudure et donc de simplifier la réalisation des connexions entre les extrémités d'enroulements et les crochets de l'interconnecteur. L'invention présente également un caractère économique du fait du gain de temps obtenu. On supprime également les contraintes liées au positionnement des électrodes et des portes-électrodes lors des opérations de soudage.

Selon une réalisation, chaque crochet présente une section en forme de U, ou de V. Selon une réalisation, chaque crochet présente des bords chanfreinés du côté de leur extrémité d'ouverture.

Selon une réalisation, l'interconnecteur comporte un corps et au moins une trace de connexion à laquelle est relié électriquement au moins un crochet, ledit corps de l'interconnecteur étant surmoulé sur ladite trace de connexion.

Selon une réalisation, la trace de connexion et les crochets sont réalisés dans un matériau électriquement conducteur ayant une dureté supérieure à celle des extrémités d'enroulements.

Selon une réalisation, le matériau de la trace de connexion et des crochets est choisi parmi un des matériaux suivants: cuivre allié à du fer, notamment dans une proportion de 2% de fer, cuivre, bronze, laiton, acier, acier DC01, acier DC04.

Selon une réalisation, chaque crochet comporte deux pattes, une épaisseur et/ou un écartement entre les pattes étant sélectionnés pour définir une surface de contact entre les pattes et les extrémités d'enroulements de préférence de section circulaire. Une surface de contact adéquate va permettre de minimiser la résistance et d'augmenter l'adhérence entre les pattes et les extrémités d'enroulements.

Selon une réalisation, un ratio d'une largeur des crochets divisée par un diamètre d'une extrémité d'enroulement est compris entre 0.60 et 0.75.

Selon une réalisation, un ratio d'une épaisseur des crochets divisée par un diamètre d'une extrémité d'enroulement est compris entre 0.60 et 0.95. De tels ratios permettent d'optimiser la circulation du courant entre le fil des enroulements et la trace de connexion via les crochets.

Selon une réalisation, l'interconnecteur comporte des goulottes de guidage axial des extrémités d'enroulements.

Selon une réalisation, l'interconnecteur comporte en outre des goulottes d'insertion des extrémités d'enroulements pour guider l'insertion des extrémités d'enroulements dans les crochets correspondants.

Selon une réalisation, des axes de deux goulottes d'insertion adjacentes forment entre eux un angle positif, l'angle étant considéré du côté intérieur du corps de stator. Autrement dit, l'intersection des axes de deux goulottes d'insertion adjacentes se situe au-delà de la périphérie externe du corps de stator.

Selon une réalisation, l'interconnecteur comporte au moins une béquille inférieure et une béquille supérieure, lesdites béquilles faisant saillie axialement de part et d'autre d'un corps de l'interconnecteur, la béquille inférieure venant en appui contre une face d'extrémité axiale du corps de stator, la béquille supérieure venant en appui contre un palier de la machine électrique, pour assurer un montage serré de l'interconnecteur dans la machine électrique.

Selon une réalisation, l'interconnecteur comporte une zone de préhension pour permettre à un outil d'insertion des extrémités d'enroulements de maintenir l'interconnecteur en position lors de l'insertion des extrémités d'enroulements.

Selon une réalisation, la zone de préhension comporte des butées pour le guidage et le maintien de l'interconnecteur par rapport au corps de stator lors de l'insertion des extrémités d'enroulements.

Selon une réalisation, l'interconnecteur comporte des murets en saillie axiale s'étendant chacun entre deux crochets adjacents pour limiter l'établissement d'un pont salin.

Selon une réalisation, l'interconnecteur comporte des ouvertures radiales pour le passage d'un flux de fluide de refroidissement de la machine électrique tournante. Ces ouvertures permettent de favoriser le débit du fluide de refroidissement, notamment un flux d'air généré par des ventilateurs du rotor.

Selon une réalisation, l'interconnecteur comporte un chanfrein suivant un pourtour extérieur, notamment du côté axial opposé au corps de stator. Cela permet d'éviter les interférences de montage de l'interconnecteur contre le palier arrière.

Selon une réalisation, le bobinage est de type double triphasé, les enroulements du bobinage étant couplés notamment en étoile ou en triangle-étoile.

Selon une réalisation, les extrémités d'enroulements sont reliées électriquement par les crochets à un point neutre.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en coupe partielle d'un stator bobiné destiné à porter un interconnecteur selon la présente invention;
La figure 2 est une vue en perspective partielle du stator portant l'interconnecteur selon l'invention assurant le couplage des extrémités de neutre des enroulements de phase;
La figure 3 montre une vue en perspective de l'interconnecteur selon la présente invention;
La figure 4 est une vue en perspective de côté de l'interconnecteur selon la présente invention;
La figure 5 est une vue de dessus de l'interconnecteur selon la présente invention;
Les figures 6a et 6b sont des vues en perspective des traces de couplage de l'interconnecteur selon la présente invention respectivement sans et avec leurs extrémités d'enroulement insérées dans les crochets;
La figure 7 est une vue en coupe transversale d'un conducteur à section ronde utilisé pour réaliser les enroulements de phase;
La figure 8 est une vue de dessous de l'interconnecteur illustrant la forme de la zone de préhension permettant à un outil de maintenir l'interconnecteur lors de l'insertion des extrémités d'enroulement dans les crochets.

Les éléments identiques, similaires, ou analogues conservent la même référence d'une figure à l'autre. Dans la description qui suit, une face d'un élément dite "supérieure" est tournée vers l'interconnecteur tandis qu'une face dite "inférieure" est tournée du côté axial opposé du stator.

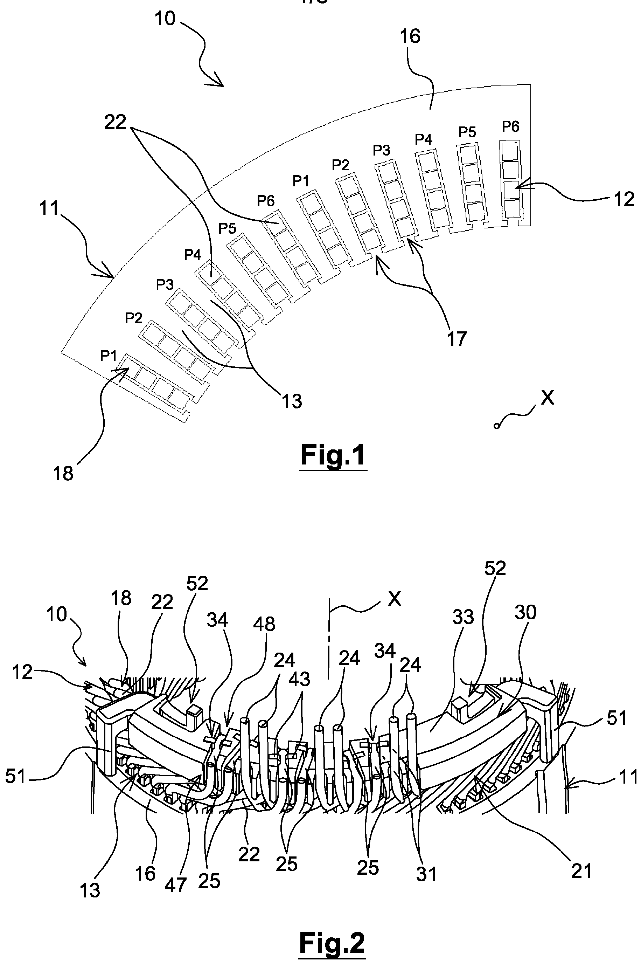

La figure 1 montre un stator 10 comportant un corps 11 et un bobinage 12. Le corps de stator 11 a une forme cylindrique annulaire d'axe X correspondant à l'axe de la machine. Le corps de stator 11 consiste en un empilement axial de tôles planes.

Le corps 11 comporte des dents 13 réparties angulairement de manière régulière sur une circonférence interne d'une culasse 16. Ces dents 13 délimitent des encoches 17, de telle façon que chaque encoche 17 est délimitée par deux dents 13 successives. La culasse 16 correspond ainsi à la portion annulaire externe pleine du corps 11 qui s'étend entre le fond des encoches 17 et la périphérie externe du stator 10.

Les encoches 17 débouchent axialement dans les faces d'extrémité axiales du corps 11. Les encoches 17 sont également ouvertes radialement dans la périphérie interne du corps 11.

Dans un bobinage 12 de type ondulé visible en figures 1 et 2, chaque phase comporte un enroulement de phase 18 traversant les encoches 17 du corps de stator 11. Ces enroulements de phase 18 forment des chignons 21 s'étendant de part et d'autre du corps de stator 11. Comme cela est montré sur la figure 2, chaque enroulement 18 est formé par exemple à partir d'au moins un conducteur 22, tel qu'un fil continu, recouvert d'une couche isolante, en particulier une couche d'émail.

Plus précisément, chaque enroulement de phase 18 est constitué par au moins un conducteur 22 continu enroulé à l'intérieur du stator 10 dans les encoches 17 pour former plusieurs spires. Chaque phase référencée P1-P6 sur la figure 1 est associée à une série d'encoches 17 de l'ensemble d'encoches 17, de sorte que chaque encoche 17 reçoit plusieurs fois les conducteurs 22 d'une même phase P1-P6. Deux encoches 17 consécutives d'une série sont séparées par des encoches adjacentes correspondant chacune à une autre série d'encoches associée à l'une des autres phases P1-P6. Ainsi, lorsqu'il y a K phases, les conducteurs 22 d'un même enroulement de phase 18 sont insérés toutes les K+1 ième encoches. Par exemple, si l'enroulement de la première phase P1 est inséré dans l'encoche n°1, il est ensuite inséré dans la 7ème encoche pour une machine hexaphasée ou double triphasée, soit K=6.

Les extrémités 24, 25 des enroulements de phase 18 s'étendent préférentiellement suivant un même secteur angulaire du stator 10, c'est-à-dire que l'écart angulaire entre deux extrémités d'enroulements 24, 25 adjacentes est constant suivant la zone angulaire dans laquelle se situent les extrémités 25, tel que cela est montré sur la figure 2.

Les enroulements de phase 18 sont reliés électriquement à des modules électroniques de puissance (non représentés) via leur première extrémité 24, dite sortie de phase. Ces modules de puissance forment un pont redresseur de tension pour transformer un courant alternatif généré par la machine en un courant continu pour alimenter notamment la batterie et le réseau de bord du véhicule. Ces modules ou d'autres modules de puissance pourront également être commandés pour injecter du courant dans les différentes phases de la machine électrique lorsque cette dernière fonctionne en mode moteur.

Dans un couplage électrique de type étoile d'une machine double triphasé, les deuxièmes extrémités 25 de chaque système triphasé sont reliées à un point neutre au moyen d'un interconnecteur 30 visible sur les figures 2, 3, 4 et 5. Cet interconnecteur 30 s'étend suivant une forme en arc de cercle au-dessus du chignon supérieur 21 suivant un secteur angulaire limité de la culasse 16. L'interconnecteur 30 est positionné entre la périphérie interne et la périphérie externe du corps de stator 11.

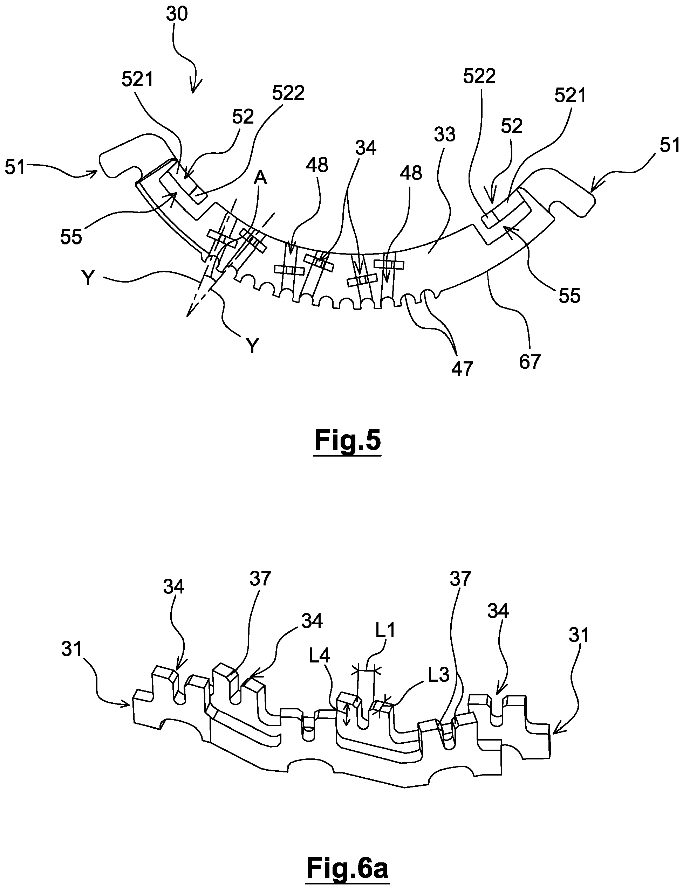

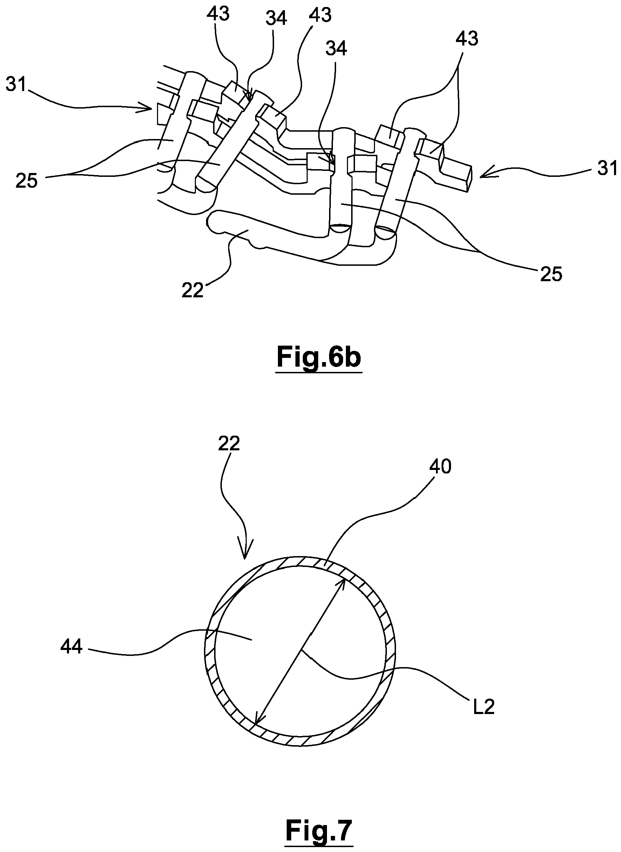

Cet interconnecteur 30 comporte deux traces de connexion 31 visibles sur les figures 6a et 6b et un corps 33 réalisé dans un matériau isolant, par exemple en matière plastique renforcée par des fibres, surmoulé sur les traces de connexion 31.

Afin d'établir les connexions, trois extrémités 25 d'un premier système triphasé sont reliées électriquement à une première trace de connexion 31 par des crochets 34. Trois autres extrémités 25 d'un deuxième système triphasé sont reliées électriquement à une deuxième trace de connexion 31 par des crochets 34. Autrement dit, chaque trace de connexion 31 est associée à un système triphasé. Comme on peut le voir sur la figure 6a, ces traces 31 sont indépendantes l'une par rapport à l'autre et s'étendent 13 sensiblement parallèlement l'une par rapport à l'autre formant ainsi un écart constant entre les traces sensiblement sur toute la longueur sur laquelle s'étendent les traces. Une couche de matériau électriquement isolant est interposée entre les deux traces 31.

Les crochets 34 sont reliés électriquement à la trace de connexion 31 correspondante en étant monobloc avec la trace de connexion 31. Les crochets 34 présentent en l'occurrence une section en forme de U mais pourront en variante présenter une section en forme de V. Les crochets 34 comportent en outre avantageusement des bords chanfreinés 37 du côté de leur extrémité d'ouverture, tel que montré sur la figure 6a. Cela permet de faciliter l'insertion des extrémités d'enroulements 25 à l'intérieur des crochets 34. Les crochets 34 présentent en outre une largeur L1 mesurée entre leurs faces en vis-à-vis l'une de l'autre inférieure à une dimension correspondante du conducteur 22, notamment le diamètre L2 dans le cas d'un conducteur prenant la forme d'un fil rond, tel que montré sur la figure 7. Cela permet de dénuder la couche isolante 40 des extrémités d'enroulements 25 afin d'établir la liaison électrique avec les extrémités d'enroulements 25.

Les crochets 34 sont ainsi aptes à établir une liaison électrique avec les extrémités 25 d'enroulements par déformation plastique de l'extrémité 25. Cela a pour effet d'écrouir les extrémités d'enroulements 25 et donc de rigidifier la partie métallique 44 de ces extrémités 25 correspondant à l'âme du conducteur 22. Chaque extrémité d'enroulements 25 est ainsi maintenue serrée par un crochet 34 correspondant.

Suivant une réalisation particulière, les extrémités d'enroulements 25 auront été préalablement dénudées avant leur insertion à l'intérieur des crochets 34. Dans ce cas, les crochets 34 assurent uniquement leur écrouissage et leur maintien pour établir une liaison électrique entre les traces de connexion 31 et les extrémités d'enroulements 25.

De préférence, les traces de connexion 31 et les crochets 34 sont réalisés dans un matériau électriquement conducteur ayant une dureté supérieure à celle des extrémités d'enroulements 25. Le matériau des traces de connexion 31 et des crochets 34 est choisi parmi un des matériaux suivants: cuivre allié à du fer, notamment dans une proportion de 2% de fer (CuFe2p pour une meilleure résistance électrique et une dureté optimale), cuivre, bronze, laiton, acier, acier DC01, acier DC04. La dureté du matériau et son module d'élasticité sont choisis de façon appropriée pour l'application.

Comme on peut le voir sur les figures 6a et 6b, chaque crochet 34 comporte deux pattes 43. L'épaisseur et/ou l'écartement entre les pattes 43 sont sélectionnés pour définir une surface de contact prédéterminée entre les pattes 43 et les extrémités d'enroulements 25. Plus la surface de contact est importante, plus la résistance électrique est faible et plus la tenue mécanique et l'adhérence entre les pattes 43 et les extrémités 25 est bonne.

Un ratio d'une largeur L1 des crochets 34 (cf. figure 6a) divisée par le diamètre L2 d'une extrémité d'enroulement 25 est compris entre 0.60 et 0.75. On précise que le diamètre de l'extrémité d'enroulement 25 est considéré uniquement pour la partie cuivrée 44 (cf. figure 7), c'est-à-dire sans la couche isolante 40. Une valeur préférentielle de ratio pourra par exemple être obtenue pour un diamètre L2 de fil de 2mm et une largeur L1 de crochets 34 mesurée entre les pattes 43 de 0.68mm.

Un ratio d'une épaisseur L3 des crochets 34 divisée par un diamètre L2 d'une extrémité d'enroulement 25 est compris entre 0.60 et 0.95. Une valeur préférentielle de ratio pourra par exemple être obtenue pour un diamètre L2 de fil de 2mm et une épaisseur L3 de crochet 34 de 1.5mm.

De tels ratios permettent d'optimiser la circulation du courant entre le fil des enroulements 18 et les traces de connexion 31 via les crochets 34. En outre, une hauteur L4 des crochets 34 est au moins égale au diamètre L2 des extrémités d'enroulements 25. En variante, les conducteurs 22 pourront présenter une section de forme carrée, comme représenté sur la figure 1.

Comme cela est visible sur les figures 2, 3, 4, et 5, l'interconnecteur 30 comporte en outre des goulottes de guidage axial 47 des extrémités d'enroulements 24, 25. Les premières extrémités 24 connectées aux modules électroniques de puissance, qui sont positionnées axialement au-dessus de l'interconnecteur 30, passent uniquement par les goulottes de guidage 47. Les goulottes de guidage 47 présentent une forme d'empreinte creuse semi-circulaire ayant une forme complémentaire de celle des extrémités 24, 25. Les goulottes de guidage 47 pourront être équipées d'un dispositif de maintien par encliquetage des extrémités 24, afin notamment de garantir le positionnement des extrémités 24 avant réalisation des connexions avec les modules de puissance.

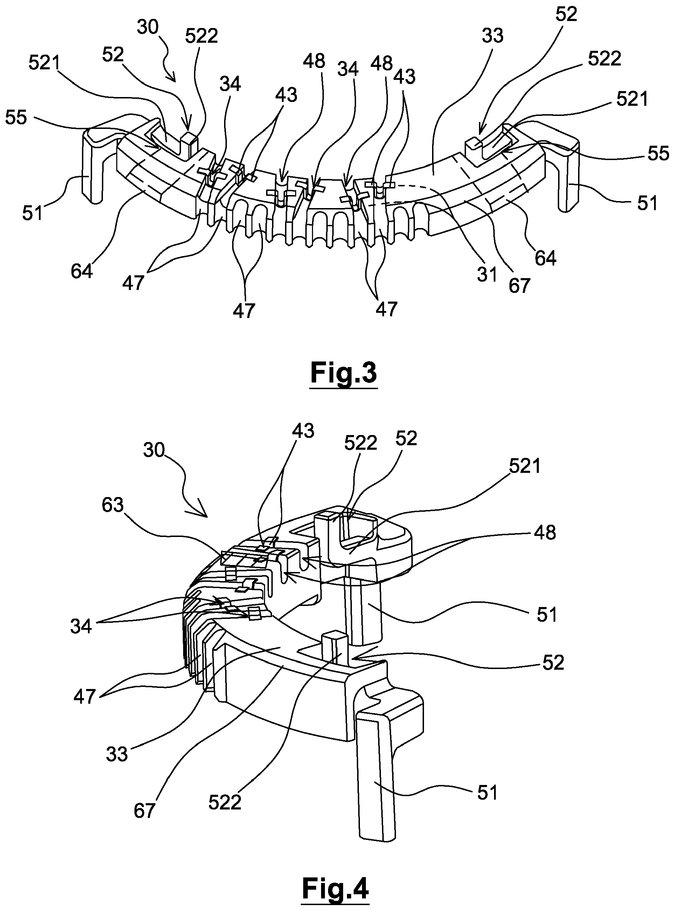

Par ailleurs, des goulottes d'insertion 48 des extrémités d'enroulements 25 visibles en figure 3 notamment assurent un guidage lors de l'insertion des extrémités d'enroulements 25 dans les crochets 34 correspondants. A cet effet, les crochets 34 sont implantés à l'intérieur des goulottes d'insertion 48 qui, comme les goulottes 47, présentent une forme d'empreinte creuse semi-circulaire ayant une forme correspondante de celle des extrémités d'enroulements 25.

Les goulottes d'insertion 48 se situent dans le prolongement des goulottes de guidage 47 tout en formant un angle de l'ordre de 90 degrés par rapport aux goulottes 47. En effet, les goulottes de guidage 47 présentent une orientation axiale par rapport à l'axe X du stator 10, tandis que les goulottes d'insertion 48 s'étendent dans un plan sensiblement radial par rapport à l'axe X du stator 10.

Avantageusement, comme cela est illustré par la figure 5, les axes Y de deux goulottes d'insertion 48 adjacentes forment entre eux un angle A positif, l'angle A étant considéré du côté intérieur du corps de stator 11. Autrement dit, l'intersection des axes Y de deux goulottes d'insertion 48 adjacentes se situe au-delà de la périphérie externe du corps de stator 11. On précise que les axes Y des goulottes passent par le centre de leur section transversale. Cela permet d'éloigner au maximum deux goulottes d'insertion 48 adjacentes l'une de l'autre afin d'éviter la formation de ponts salins.

En outre, afin d'assurer son maintien à l'intérieur de la machine électrique, l'interconnecteur 30 comporte un couple de béquilles inférieures 51 et un couple de béquilles supérieures 52, visibles sur les figures 2, 3, 4, et 5. Les béquilles 51 et 52 font saillie axialement par rapport à l'axe X de la machine électrique de part et d'autre du corps 33 de l'interconnecteur 30.

Les béquilles inférieures 51 sont destinées à venir en appui contre une face d'extrémité 25 axiale du corps de stator 11 en l'occurrence une face d'extrémité supérieure de la culasse 16, tandis que les béquilles supérieures 52 sont destinées à venir en appui contre un palier de la machine électrique, pour assurer un montage serré de l'interconnecteur 30 dans la machine électrique. Ainsi, dans une telle configuration, l'interconnecteur 30 est monté légèrement comprimé entre la culasse 16 et le palier arrière de la machine électrique.

Dans un mode de réalisation particulier, les béquilles inférieures 51 non flexibles garantissent un mouvement relatif minimal entre l'interconnecteur 30 et les extrémités d'enroulement 25 reliées au neutre au moment de l'assemblage de la machine. Les béquilles inférieures 51 empêchent en outre l'interconnecteur 30 d'être en appui avec le chignon supérieur 21. A cette fin, la hauteur axiale des béquilles inférieures 51 est strictement supérieure à la hauteur axiale du chignon supérieur 21, ce qui permet de disposer d'un jeu entre le chignon supérieur 21 et l'interconnecteur 30.

Les béquilles supérieures 52 sont flexibles pour garantir la montabilité de l'ensemble. En effet, la configuration des béquilles supérieures 52 leur permet de fléchir, pour que l'interconnecteur 30 soit maintenu en contact par compression avec le corps de stator 11 et le palier arrière.

Dans l'exemple de réalisation représenté aux figures 3, 4, et 5, chaque béquille supérieure 52 comporte une première portion 521 s'étendant dans le plan d'extension principal du corps 33 de l'interconnecteur 30 en étant dirigé tangentiellement vers l'intérieur du corps 33, ainsi qu'une deuxième portion 522 s'étendant axialement par rapport à l'axe X du stator 10. Il existe un dégagement 55 entre le corps de stator 11 et les premières portions 521 afin d'augmenter la flexibilité des béquilles supérieures 52. En variante, les béquilles supérieures 52 sont orientées dans l'autre sens, c'est-à-dire tangentiellement vers l'extérieur du corps 33.

Les béquilles inférieures 51 dirigées axialement vers la culasse 16 pour venir en appui contre sa face d'extrémité sont décalées radialement et circonférentiellement par rapport aux béquilles supérieures 52.

Avantageusement, la position relative des deux couples de béquilles 51, 52 empêche le basculement de l'interconnecteur 30 au cours du montage et évite qu'il ne vienne en contact avec le chignon supérieur 21. A cet effet, le couple résultant avec les béquilles inférieures 51 en appui compense notamment le couple associé aux efforts de maintien des extrémités d'enroulements 25.

En variante, il serait possible d'inverser la configuration des béquilles 51, 52 en prévoyant des béquilles inférieures 51 flexibles et des béquilles supérieures 52 rigides. En variante, l'interconnecteur 30 comporte une seule béquille inférieure 51 et une seule béquille supérieure 52 ou plus de deux béquilles inférieures 51 et plus de deux béquilles supérieures 52.

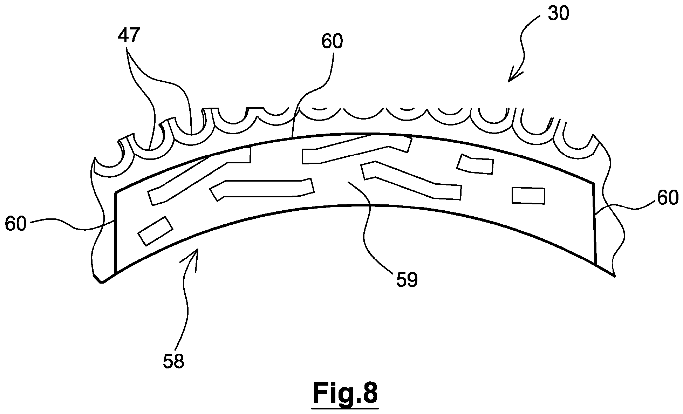

Comme on peut le voir sur la figure 8, l'interconnecteur 30 pourra comporter une zone de préhension 58 pour permettre à un outil d'insertion des extrémités d'enroulements 25 de maintenir l'interconnecteur 30 en position lors de l'opération d'insertion. La zone de préhension 58 comporte une surface plane 59 en forme d'arc de cercle ménagée dans la face d'extrémité 25 inférieure de l'interconnecteur 30. La surface plane 59 est délimitée par des butées 60 pour le guidage et le maintien de l'interconnecteur 30 par rapport au corps de stator 11 lors de l'insertion des extrémités d'enroulements 25 à l'intérieur des crochets 34.

L'interconnecteur 30 pourra également comporter des murets 63 en saillie axiale s'étendant chacun entre deux crochets 34 adjacents pour limiter l'établissement de ponts salins, tel que montré sur la figure 4. L'interconnecteur 30 pourra également comporter des ouvertures radiales 64 pour le passage d'un flux de fluide de refroidissement de la machine électrique tournante, tel que montré sur la figure 3. Ces ouvertures 64 permettent de favoriser le débit du fluide de refroidissement, notamment un flux d'air généré par des ventilateurs internes de la machine fixés aux extrémités axiales du rotor.

Comme cela est visible sur la figure 4 notamment, l'interconnecteur 30 pourra également comporter un chanfrein 67 s'étendant circonférentiellement suivant un pourtour extérieur du corps 33, notamment du côté axial opposé au corps de stator 11. Cela permet d'éviter les interférences de montage entre l'interconnecteur 30 et le palier arrière.

En variante, dans le cas d'un couplage en triangle, l'interconnecteur 30 pourra assurer le couplage des extrémités d'enroulement 25 appartenant à deux phases distinctes.

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.

## Revendications

1. Machine électrique tournante, notamment pour véhicule automobile, comportant:
- un stator (10) comprenant un corps (11) et un bobinage (12), le bobinage (12) étant muni d'une pluralité d'enroulements de phase (18) formés chacun par au moins un conducteur (22) recouvert d'une couche isolante (40),
- un interconnecteur (30) établissant une liaison électrique d'au moins deux extrémités d'enroulements (25) appartenant à deux enroulements de phase (18) distincts,
**caractérisée en ce que** l'interconnecteur (30) comporte des crochets (34) aptes à dénuder la couche isolante (40) des extrémités d'enroulements (25) pour l'établissement de la liaison électrique avec les extrémités d'enroulements (25).

2. Machine électrique tournante selon la revendication 1, **caractérisée en ce que** chaque crochet (34) présente une section en forme de U, ou de V.

3. Machine électrique tournante selon la revendication 1 ou 2, **caractérisée en ce que** l'interconnecteur (30) comporte un corps (33) et au moins une trace de connexion (31) à laquelle est relié électriquement au moins un crochet (34), ledit corps (33) de l'interconnecteur (30) étant surmoulé sur ladite trace de connexion (31).

4. Machine électrique tournante selon la revendication 3, **caractérisée en ce que** la trace de connexion (31) et les crochets (34) sont réalisés dans un matériau électriquement conducteur ayant une dureté supérieure à celle des extrémités d'enroulements (25).

5. Machine électrique tournante selon la revendication 3 ou 4, **caractérisée en ce que** le matériau de la trace de connexion (31) et des crochets (34) est choisi parmi un des matériaux suivants: cuivre allié à du fer, notamment dans une proportion de 2% de fer, cuivre, bronze, laiton, acier, acier DC01, acier DC04.

6. Machine électrique tournante selon l'une quelconque des revendications 1 à 5, **caractérisée en ce que** chaque crochet (34) comporte deux pattes (43), une épaisseur et/ou un écartement entre les pattes (43) étant sélectionnés pour définir une surface de contact entre les pattes (43) et les extrémités d'enroulements (25) de préférence de section circulaire.

7. Machine électrique tournante selon l'une quelconque des revendications 1 à 6, **caractérisée en ce que** l'interconnecteur (30) comporte des goulottes de guidage axial (47) des extrémités d'enroulements (25).

8. Machine électrique tournante selon l'une quelconque des revendications 1 à 7, **caractérisée en ce que** l'interconnecteur (30) comporte en outre des goulottes d'insertion (48) des extrémités d'enroulements (25) pour guider l'insertion des extrémités d'enroulements (25) dans les crochets (34) correspondants.

9. Machine électrique tournante selon la revendication 8, **caractérisée en ce que** des axes (Y) de deux goulottes d'insertion (48) adjacentes forment entre eux un angle (A) positif, l'angle (A) étant considéré du côté intérieur du corps de stator (11).
